# EUROPEAN PATENT SPECIFICATION

(11) **EP 2 568 481 B1**
(45) Date of publication and mention of the grant of the patent: **04.04.2018**
(21) Application number: 11814522.6
(22) Date of filing: 27.07.2011
(51) Int. Cl.: H01F 7/127, F16K 31/06, H01F 7/16

(54) **ELECTROMAGNETIC DRIVE UNIT AND METHOD FOR MANUFACTURING THE SAME**
ELEKTROMAGNETISCHE ANTRIEBSEINHEIT UND VERFAHREN ZU IHRER HERSTELLUNG
UNITÉ DE COMMANDE ÉLECTROMAGNÉTIQUE ET PROCÉDÉ DE PRODUCTION DE CELLE-CI

(30) Priority: 03.08.2010 JP 2010174725
(43) Date of publication of application: 13.03.2013
(73) Proprietor: Hitachi Construction Machinery Co., Ltd., Bunkyo-ku Tokyo 112-8563 (JP)
(72) Inventor: ITOU, Hideaki, Tsuchiura-shi Ibaraki 300-0013 (JP); HIRANO, Sakurako, Tsuchiura-shi Ibaraki 300-0013 (JP); TAKAO, Masaki, Tsuchiura-shi Ibaraki 300-0013 (JP); YOSHIMOTO, Mitsuhiro, Tsuchiura-shi Ibaraki 300-0013 (JP); YAMAMOTO, Akihiko, Tsuchiura-shi Ibaraki 300-0013 (JP); INATSU, Yousuke, Tsuchiura-shi Ibaraki 300-0013 (JP)
(74) Representative: V.O.
(86) International application number: PCT/JP2011/067113
(87) International publication number: WO 2012/017895

(56) References cited:
- WO-A1-2009/156052
- DE-A1- 10 235 644
- JP-A- 9 320 840
- JP-A- S57 162 306
- JP-A- 2000 145 567
- JP-A- 2008 232 440

## Description

### TECHNICAL FIELD

The present invention relates to an electromagnetic drive unit and a method for manufacturing the electromagnetic drive unit. Especially, the present invention relates to an electromagnetic drive unit that is preferred to be used as a drive unit for an oil-immersed solenoid valve.

### BACKGROUND ART

Conventionally, a well-known electromagnetic drive unit includes an inner housing, which encloses a plunger, and a solenoid assembly, which is mounted to surround this inner housing. This electromagnetic drive unit employs a system where controlling power feeding to this solenoid assembly moves the plunger inside the inner housing in a shaft center direction.

This type of electromagnetic drive unit employs an inner housing that includes a stator made of magnetic material, a yoke made of magnetic material, and a pipe (a circular member) that is made of non-magnetic material and couples the stator and the yoke together. The stator, the yoke, and the pipe are all coaxially arranged. Generally, the yoke and the pipe are bonded by welding, and the stator and the pipe are also bonded by welding.

As a structure of the inner housing, for example, Patent Literature 1 discloses a known technique. Patent Literature 1 discloses a plunger guide (the inner housing) that is formed as follows. One tube-shaped portion (the pipe) made of non-magnetic material has both end portions where the respective end portions are fitted to two tube-shaped portions (the stator and the yoke) made of magnetic material. Using a TIG welding method and a similar method, butt-welding is performed on fitted portions. Therefore, the three tube-shaped portions are integrally welded. Subsequently, in order to ensure the three tube-shaped portions with uniform thicknesses, cutting work is performed on an inner wall surface of the plunger guide so as to cut a predetermined thickness. This completes one plunger guide.

### CITATION LIST

### PATENT LITERATURE

PATENT LITERATURE 1: Japanese Examined Patent Application Publication No. 2-15750.

### SUMMARY OF INVENTION

### TECHNICAL PROBLEM

However, the plunger guide disclosed in Patent Literature 1 needs machining after welding the three tube-shaped portions. This increases the number of processing operations of the plunger guide, thus causing increase in cost. Especially, the plunger guide has an inner peripheral surface that functions as a sliding contact surface where the plunger is brought into sliding contact. This necessitates cutting work on the inner wall surface with high process accuracy. Therefore, this process necessitates a skilled operator and a high-performance machine, and a cutting process on the inner peripheral surface of the plunger guide, which obviously spends a lot of time. Since processing time is calculated as manufacturing cost of the plunger guide, long processing time results in an expensive plunger guide. That is, in Patent Literature 1, a problem arises in that the increased number of processing operations for manufacturing the plunger guide causes increase in cost.

Additionally, in order to process the inner peripheral surface of the plunger guide, an opening is required to insert a blade edge of machine tool into the plunger guide. However, since the plunger guide is needed to be sealed after the plunger is housed, an additional member is required to cover the opening. In Patent Literature 1, a problem arises in that this situation causes extra cost. In Patent Literature 1, in order to perform machining on the inner peripheral surface of the plunger guide, variation in quality of the plunger guide occurs due to machining accuracy, which is also a problem.

The present invention has been made in view of the above-described circumstances, and it is an object of the present invention to provide an electromagnetic drive unit that reduces the number of processing operations of the inner housing and reduces manufacturing cost, and to provide a method for manufacturing this electromagnetic drive unit. The other object of the present invention is to provide an electromagnetic drive unit that reduces the number of components included in the inner housing and ensures quality stability in the inner housing, and to provide a method for manufacturing this electromagnetic drive unit.

### SOLUTION TO PROBLEM

In order to achieve the aforementioned objects, according to a first aspect of the invention, an electromagnetic drive unit includes an inner housing, a plunger, and a solenoid assembly. The inner housing includes a stator, a yoke, and a cylindrical member. The stator is made of magnetic material. The yoke is coaxially disposed with respect to the stator. The yoke is made of magnetic material. The cylindrical member is made of non-magnetic material. The cylindrical member is disposed in a position between the stator and the yoke. The cylindrical member is coaxially disposed with respect to the stator. The cylindrical member couples the stator and the yoke together. The plunger is housed in the inner housing. The plunger axially moves while being guided along an inner peripheral surface of the inner housing. The solenoid assembly is mounted to surround the inner housing. The solenoid assembly is configured to closely separate the plunger from the stator using power feeding control. A first level difference portion at a lower level (indentation) is formed in an end portion at the stator side of an outer peripheral surface of the yoke. The stator has a base end surface facing the plunger. The base end surface includes a magnetic controller that is a circular member axially projecting. The magnetic controller is configured to control a magnetic force. A second level difference portion at a lower level (indentation) is formed in an end portion at the base end surface side of an outer peripheral surface of the stator. The cylindrical member has an inner diameter at one end side and an inner diameter at another end side. The inner diameter at the one end side has approximately a same size as an outline size of the first level difference portion. The inner diameter at the other end side has approximately a same size as an outline size of the second level difference portion. The inner housing is formed by: bonding the cylindrical member and the yoke by welding in a state where the one end side of the cylindrical member is fitted in the first level difference portion; and bonding the cylindrical member and the stator by welding in a state where the other end side of the cylindrical member is fitted in the second level difference portion.

With the first aspect of the invention, in a state where the one end side of the cylindrical member is fitted in the first level difference portion of the yoke from the outside while the other end side of the cylindrical member is fitted in the second level difference portion of the stator from the outside, bonding respective coupling portions by welding allows forming the inner housing. Accordingly, this eliminates the need for machining on the inner peripheral surface of the inner housing unlike the conventional technique. Thus, the first aspect of the invention reduces the number of processing operations of the inner housing, and reduces manufacturing cost.

With the first aspect of the invention, this eliminates the need for machining on the inner peripheral surface of the inner housing. The inner housing does not need to have a structure where an opening for inserting a blade edge of machine tool is preliminarily disposed in the inner housing, and the opening is then covered after machining. Accordingly, this eliminates the need for a member for covering the opening, and reduces the number of components, thus further reducing cost. Additionally, the first aspect of the invention eliminates the need for machining on the inner peripheral surface of the inner housing. This prevents variation in quality of the inner housing due to machining accuracy, and stabilizes quality as advantageous effects.

With the first aspect of the invention, the inner diameter of the cylindrical member at the one end side has approximately the same size as that of the outline size of the first level difference portion. This means that the inner diameter of the cylindrical member at the one end side has a size that allows press-fitting or a similar method to fit the cylindrical member in the first level difference portion. Similarly, the inner diameter of the cylindrical member at the other end side has approximately the same size as that of the outline size of the second level difference portion. This means that the inner diameter of the cylindrical member at the other end side has a size that allows press-fitting or a similar method to fit the cylindrical member in the second level difference portion.

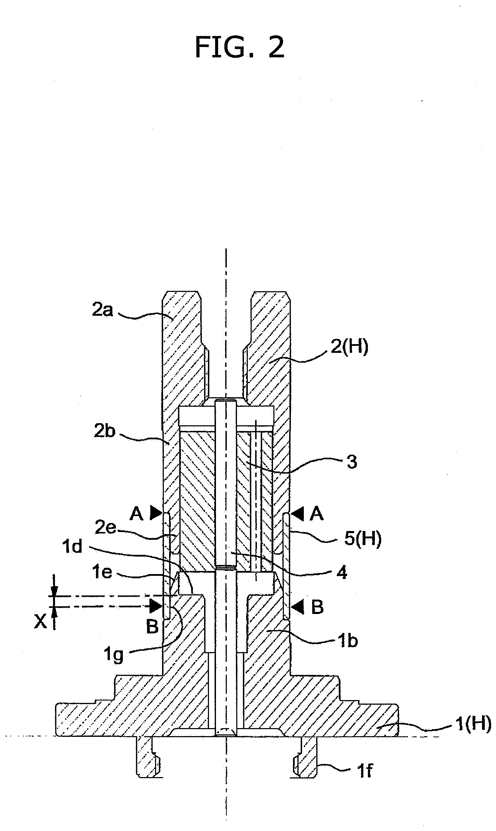

According to the invention, in the aforementioned configuration, a weld line of the cylindrical member and the stator is formed in a position at a predetermined interval (see a spacing X in FIG. 2) from the base end surface. The position is in an opposite direction of a projecting direction of the circular member. The circular member is included in the magnetic controller. The magnetic controller is an important portion that determines performance of the electromagnetic drive unit. Therefore, it is preferred that, for example, deterioration in coaxiality or sliding accuracy of the magnetic controller due to welding distortion and change in magnetic property due to heat influence of welding be prevented. With the second aspect of the invention, the weld line between the cylindrical member and the stator are formed in a position distant from the magnetic controller. This rarely allows influence on the magnetic controller due to welding. Accordingly, this aspect of the invention prevents deterioration in performance of the electromagnetic drive unit even in the case where the cylindrical member and the stator are bonded by welding.

According to the invention, in the aforementioned configuration, the cylindrical member and the yoke are bonded by butt-welding while the cylindrical member and the stator are bonded by lap-welding. The yoke has the inner peripheral surface that is a sliding surface where the plunger slides. In view of this, it is preferred that distortion of the sliding surface due to welding be prevented. With this aspect of the invention, the cylindrical member and the yoke are bonded by butt-welding. This prevents the inner peripheral surface of the yoke, that is, the sliding surface of the plunger from being distorted due to influence of welding. Additionally, with the third aspect of the invention, the cylindrical member and the stator are bonded by lap-welding. This saves labor on control of welding operation compared with operation for bonding by butt-welding. This improves operation efficiency, thus further shortening operation time for manufacturing the inner housing and reducing cost of the inner housing.

A second aspect of the invention is an invention of a method for manufacturing an electromagnetic drive unit. Specifically, the electromagnetic drive unit includes an inner housing and a plunger. The inner housing includes a stator, a yoke, and a cylindrical member. The stator is made of magnetic material. The yoke is coaxially disposed with respect to the stator. The yoke is made of magnetic material. The cylindrical member is made of non-magnetic material. The cylindrical member is disposed in a position between the stator and the yoke. The cylindrical member is coaxially disposed with respect to the stator. The cylindrical member couples the stator and the yoke together. The plunger is housed in the inner housing. The plunger axially moves while being guided along an inner peripheral surface of the inner housing. A first level difference portion at a lower level (indentation) is formed in an end portion at the stator side of an outer peripheral surface of the yoke. The stator has a base end surface facing the plunger. The base end surface includes a magnetic controller that is a circular member axially projecting. The magnetic controller is configured to control a magnetic force. A second level difference portion at a lower level (indentation) is formed in an end portion at the base end surface side of an outer peripheral surface of the stator. The cylindrical member has an inner diameter at one end side and an inner diameter at another end side. The inner diameter at the one end side has approximately a same size as an outline size of the first level difference portion. The inner diameter at the other end side has approximately a same size as an outline size of the second level difference portion. The method for manufacturing the electromagnetic drive unit includes a first step, a second step, and a third step. The first step fits the one end side of the cylindrical member in the first level difference portion of the yoke in a state where the plunger is enclosed, and fits the other end side of the cylindrical member in the second level difference portion of the stator to assemble the inner housing. The second step bonds a butt portion between an end surface of the cylindrical member at the one end side and the first level difference portion of the yoke by butt-welding after the first step. The third step bonds the other end side of the cylindrical member and the second level difference portion of the stator by lap-welding after the second step, so as to form a weld line between the cylindrical member and the stator in a position at a predetermined interval from the base end surface. The position is in an opposite direction of a projecting direction of the circular member. The circular member is included in the magnetic controller.

According to the the invention, the first step assembles the inner housing, the second step bonds the cylindrical member and the yoke by butt-welding, and the third step bonds the cylindrical member and the stator by lap-welding, thus simply completing the inner housing. That is, the second aspect of the invention eliminates the need for a process for machining on the inner peripheral surface after the yoke, the cylindrical member, and the stator are welded. Accordingly, this aspect of the invention reduces the number of processing operations of the inner housing, and reduces manufacturing cost. The weld line between the cylindrical member and the stator is in a position distant from the magnetic controller. This prevents a trouble such as change in magnetic property of the magnetic controller due to welding.

In the case of butt-welding, in order to reduce variation in welding quality, the welding needs precise control such as checking whether or not a proper gap is formed in the butt portion and checking whether or not a welding position is displaced. In contrast, lap-welding generally does not need control as precise as that of butt-welding. Here, in the case where the cylindrical member and the yoke are bonded by butt-welding after the cylindrical member and the stator are bonded by lap-welding, influence by this lap-welding of the cylindrical member and the stator causes variation of the gap in the butt portion between the cylindrical member and the yoke, a fallen member, displacement in welding position, and a similar trouble. Accordingly, bonding the cylindrical member and the yoke by butt-welding as they are causes variation in welding quality. In order to reduce variation in welding quality, adjustment of welding condition is needed for each welding. For example, the adjustment aligns the butt portion between the cylindrical member and the yoke. This adds extra time to the welding process.

However, in the second aspect of the invention, the manufacturing method performs the second process, which bonds the cylindrical member and the yoke by butt-welding, before the third process, which bonds the cylindrical member and the stator by lap-welding. This eliminates influence on the butt portion between the cylindrical member and the yoke due to the lap-welding of the cylindrical member and the stator. Accordingly, the second aspect of the invention prevents variation in welding quality, and improves operation efficiency of the welding process as advantageous effects.

### ADVANTAGEOUS EFFECTS OF INVENTION

With the present invention, the inner housing has the simple configuration where the yoke and the stator are each simply fitted in the cylindrical member, and welded. This reduces the number of processing operations compared with the conventional configuration, thus ensuring cost reduction. Additionally, the present invention contributes to reduction of the number of components, and contributes to quality stability. With the present invention, the process for butt-welding on the cylindrical member and the yoke is performed prior to the process for lap-welding on the cylindrical member and the stator. This prevents variation in welding quality, and improves efficiency of welding operation as advantageous effects.

### BRIEF DESCRIPTION OF DRAWINGS

[Fig. 1] FIG. 1 is a longitudinal cross-sectional view of a solenoid valve with an electromagnetic drive unit according to an exemplary embodiment of the present invention.
[Fig. 2] FIG. 2 is an enlarged longitudinal cross-sectional view of a main part of the electromagnetic drive unit illustrated in FIG. 1.

### DESCRIPTION OF EMBODIMENTS

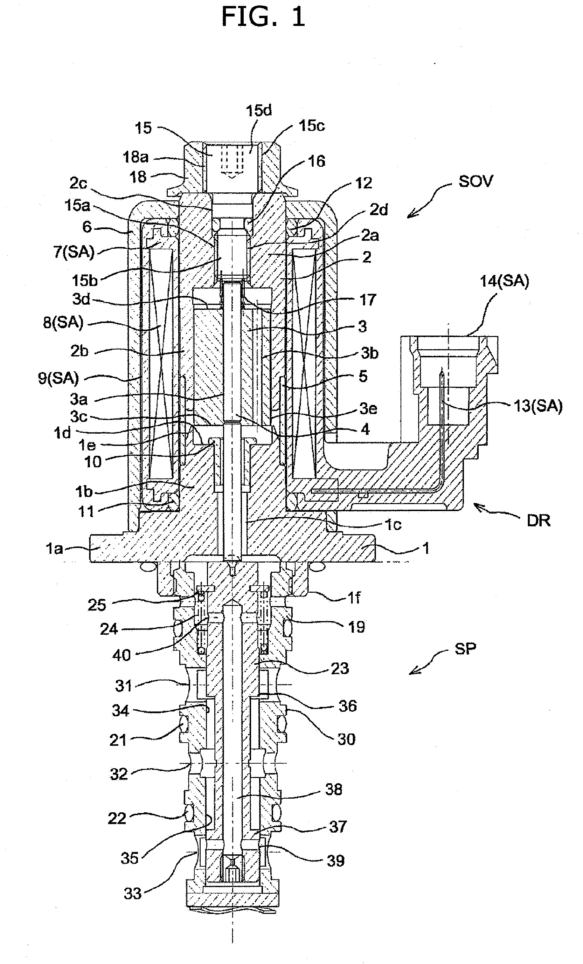

Hereinafter, a description will be given of an exemplary embodiment of the present invention by referring to FIGS. 1 and 2. As illustrated in FIG. 1, an electromagnetic drive unit DR according to the exemplary embodiment of the present invention has one end that is coupled to a directional control valve unit SP, thus being used as a solenoid valve SOV. This solenoid valve SOV is a three-port two-position directional control valve that is actuated by an electromagnetic actuation system. For example, the solenoid valve SOV is used for preventing cabin interference and depth control of a mini shovel, tilt angle control of a hydraulic piston and a motor, control of a spool and a throttle valve of a control valve, a clutch pack of an AT car, clutch control for changing forward and reverse, and similar use.

The electromagnetic drive unit DR includes an inner housing H. The inner housing H includes a stator 1 made of magnetic material, a ring (cylindrical member) 5 made of non-magnetic material, and a yoke 2 made of magnetic material. The stator 1, the ring 5, and the yoke 2, which constitute the inner housing H, are coaxially arranged. The solenoid assembly SA is mounted on the inner housing H to surround an outer peripheral surface of the inner housing H. Additionally, the inner housing H houses a plunger 3 inside. The solenoid assembly SA includes a socket 14 for power feeding. The power feeding from the socket 14 allows the plunger 3 to move in a shaft center direction (an up-down direction in FIG. 1) while being guided along an inner peripheral surface of the inner housing H.

The stator 1 has a configuration including a disc-shaped flange portion 1a, a column-shaped fixed iron core 1b, and a through hole 1c. The flange portion 1a and the fixed iron core 1b are integrated together. The flange portion 1a includes a mounting portion 1f where the directional control valve unit SP is mounted on one end surface. The fixed iron core 1b projects from the other end surface of this flange portion 1a in the shaft center direction. The through hole 1c passes through the flange portion 1a and the fixed iron core 1b along the shaft center. The fixed iron core 1b has the end surface that functions as a base end surface 1d facing one end surface 3c of the plunger 3.

This base end surface 1d has a magnetic controller 1e to control a magnetic force. This magnetic controller 1e includes a circular member that projects from a peripheral edge portion of the base end surface 1d in the shaft center direction. A description will be given of a shape of the magnetic controller 1e in detail. As illustrated in FIG. 1, an outline of the magnetic controller 1e gradually becomes smaller from the base end surface 1d toward a distal end (in an upper direction of FIG. 1) while an inner diameter of the magnetic controller 1e remains constant in size along the shaft center direction of the fixed iron core 1b. The magnetic controller 1e has the distal end where a circular flat surface with a small width in plan view is formed. In other words, the magnetic controller 1e according to this embodiment has a hollow truncated cone shape that is formed as follows. A hole is formed to pass through a solid truncated cone-shaped member along the shaft center direction. The hole has a diameter slightly smaller than an outline of a top surface of the solid truncated cone-shaped member.

The stator 1 has an end portion at the base end surface 1d side of the outer peripheral surface. The end portion includes a second level difference portion 1g (see FIG. 2) at a lower level. This second level difference portion 1g is a portion in which the ring 5 is fitted, and is continuous with the outer peripheral surface of the magnetic controller 1e. A stopper 10 is fitted in the through hole 1c from the base end surface 1d side of the fixed iron core 1b. This stopper 10 restricts a range of motion such that the plunger 3 is not completely brought in contact with the base end surface 1d of the fixed iron core 1b.

Next, the plunger 3 has a configuration including a cylindrically-shaped member made of magnetic material, and its outer peripheral surface coated by a resin layer 3e. The resin layer 3e is made of non-magnetic material with a uniform thickness. This resin layer 3e is made of, for example, nylon-based resin, and has a thickness in a range of 0.03 mm to 0.2 mm accommodating for the durability of the resin layer 3e and sliding friction with an inner peripheral surface of the yoke 2. The plunger 3 includes a through hole 3a that passes through in the shaft center direction. Press-fitting a rod-shaped pin 4 into this through hole 3a integrally forms the plunger 3 and the pin 4. The pin 4 moves in the shaft center direction to move along with movement of the plunger 3 in the shaft center direction. Subsequently, the pin 4 presses a spool 23 described later. This moves the spool 23 in the shaft center direction.

The one end surface 3c of the plunger 3 is a surface that faces the base end surface 1d where the magnetic controller 1e is disposed. The other end surface 3d is a surface that faces a bottom portion 2a of the yoke 2 described next. The reference numeral 3b denotes a through hole 3b that is disposed along the shaft center direction in a position distant from the shaft center in a radial direction. The through hole 3b, which is described in detail later, is a flow passage where oil supplied from the directional control valve unit SP side flows.

Next, the yoke 2 includes a bottom portion 2a, which is a magnetic path, and a long cylindrical portion 2b, which extends from the bottom portion 2a in the shaft center direction. The long cylindrical portion 2b has an inner peripheral surface that is a sliding contact surface in sliding contact with the outer peripheral surface of the plunger 3. The plunger 3 is guided by the inner peripheral surface of the long cylindrical portion 2b, and moves in the shaft center direction. On the other hand, the outer peripheral surface of the yoke 2 has an end portion at the stator 1 side, that is, an end portion at a distal end side of the long cylindrical portion 2b. The end portion includes a first level difference portion 2e (see FIG. 2) at a lower level. The ring 5 is fitted in the first level difference portion 2e.

The yoke 2 has the bottom portion 2a where a through hole 2c is disposed along the shaft center direction. This through hole 2c has a female thread 2d inside. A screw 15, which is described next, is inserted into the through hole 2c.

This screw 15 is a member that includes a head 15d having a male thread 15c and a shaft 15b, which has a male thread 15a and an outline smaller than the head 15d. When the screw 15 is inserted into the through hole 2c, the distal end of the screw 15 presses the end surface 3d of the plunger 3 via a spring 17. This pressing force may be adjusted by rotating the screw 15 in positive or negative directions. That is, this screw 15 is disposed to adjust an operational force of the spool 23. A nut 18 is a locking nut to prevent looseness of the screw 15, and has an inner peripheral surface where a female thread 18a with the same size as that of the male thread 15c is formed. An O-ring 16 prevents leakage of oil inside the inner housing H to the outside.

Next, the solenoid assembly SA surrounds the outside of the inner housing H, and includes a bobbin 7, a coil 8, an exterior mold 9, a terminal 13, and a socket 14. The coil 8 winds around the bobbin 7. The exterior mold 9 is fitted onto the bobbin 7 to cover the coil 8. The terminal 13 is electrically coupled to the coil 8. A female plug (not shown) is inserted into the socket 14. Inserting the female plug into the socket 14 allows controlling power feeding to the coil 8 from the outside via the terminal 13. The end surface 3c of the plunger 3 is closely separated from the base end surface 1d of the stator 1. The solenoid assembly SA is entirely covered with a casing 6, and sealed by O-rings 11 and 12 from the outside.

Next, a description will be given of a method for manufacturing the inner housing H. First, the one end side of the ring 5 is fitted in the first level difference portion 2e of the yoke 2 while the plunger 3 is enclosed. Additionally, the other end side of the ring 5 is fitted in the second level difference portion 1g of the stator 1. Thus, the inner housing H is assembled. These operations are performed as a first process. A description will be specifically given of the operations of this first process. First, the stopper 10 is press-fitted into the through hole 1c of the stator 1 from the base end surface 1d side. Subsequently, this press-fitting is performed until an end
surface of the ring 5 is brought in contact with the second level difference portion 1g of the stator 1. In this state, while the plunger 3 where the pin 4 is press-fitted is inserted into the through hole 1c of the stator 1, the plunger 3 is mounted on the stator 1. Subsequently, another press-fitting is performed until an end surface of the first level difference portion 2e of the yoke 2 is brought in contact with the ring 5. This encloses the plunger 3 in the inner housing H.

Following this first process, a butt portion between the end surface at the one end side of the ring 5 and the first level difference portion 2e of the yoke 2 are bonded by butt-welding. This operation is performed as a second process. A description will be specifically given of the operation of this second process. First, a portion adjacent to an end surface of the yoke 2 at the bottom portion 2a side is clamped. Subsequently, a pre-check for welding the yoke 2 and the ring 5 is performed. The pre-check checks whether the ring 5 is fitted in an inclined direction with respect to the yoke 2, whether a gap of the butt portion between the first level difference portion 2e of the yoke 2 and the end surface of the ring 5 is uniform, and a similar condition. Subsequently, a butt portion (A part in FIG. 2) between the first level difference portion 2e of the yoke 2 and the end surface of the ring 5 is bonded over the whole circumference by laser welding.

Following this second process, the other end side of the ring 5 and the second level difference portion 1g of the stator 1 are bonded by lap-welding as a third process. A description will be specifically given of the operation of this third process. A pre-check for welding the stator 1 and the ring 5 is performed. The pre-check checks whether the stator 1 is fitted in the ring 5 in an inclined direction with respect to the yoke 2, whether a gap of the butt portion between the second level difference portion 1g of the stator 1 and the end surface of the ring 5 is uniform, and a similar condition. Subsequently, an overlapping portion between the ring 5 and the second level difference portion 1g of the stator 1 is bonded over the whole circumference by laser welding. Quality control in the welding process is severer in the second process than that in the third process. Here, a weld line is formed in a position (B position in FIG. 2) at an interval of a predetermined spacing X from the base end surface 1d of the stator 1 in the opposite direction (the downward direction in FIG. 2) of a projecting direction (the upward direction in FIG. 2) of the circular member included in the magnetic controller 1e. Accordingly, the operations in the first to third processes are performed, and the inner housing H is then completed.

The electromagnetic drive unit DR thus configured includes the directional control valve unit SP that is coaxially mounted on the electromagnetic drive unit DR. This directional control valve unit SP includes a sleeve-shaped valve casing 30 and the spool 23 that is coaxially disposed inside the valve casing 30. The valve casing 30 includes a supply port 31, which is coupled to a hydraulic pump (not shown), an output port 32, which is coupled to an actuator (not shown), and a drain port 33, which is coupled to a tank (not shown).

On the other hand, the spool 23 is mounted such that the one end side is brought in contact with the pin 4 of the electromagnetic drive unit DR. The spool 23 moves in the shaft center direction along with movement of the pin 4 in the shaft center direction. A spring 24 winds around this spool 23. The spring 24 has its one end, which is locked on an inner wall of the valve casing 30, and the other end in contact with a circular shim 25, which is fitted in the spool 23. Therefore, the spool 23 is housed in the valve casing 30 while being constantly pushed toward the stator 1 side (in the upward direction in FIG. 1) by a biasing force of the spring 24.

Additionally, the spool 23 has an outer peripheral surface where two lands 36 and 37 are disposed. In the case where the land 36 is in contact with a sealing surface 34, which is a part of the inner peripheral surface of the valve casing 30, the supply port 31 and the output port 32 are obstructed. In contrast, in the case where the land 36 is not in contact with the sealing surface 34 due to movement of the spool 23 in the shaft center direction, the supply port 31 and the output port 32 communicate with each other. Pressure oil supplied from the hydraulic pump to the supply port 31 flows in a space between the valve casing 30 and the spool 23, is output from the output port 32, and is guided to the actuator.

In the case where the land 37 is in contact with a sealing surface 35, which is a part of the inner peripheral surface of the valve casing 30, the output port 32 and the drain port 33 are obstructed. In contrast, in the case where the land 37 is not in contact with the sealing surface 35 due to movement of the spool 23 in the shaft center direction, the output port 32 and the drain port 33 communicates with each other. Therefore, the pressure oil supplied to the actuator flows in the space between the valve casing 30 and the spool 23, and returns to the tank from the drain port 33.

In this embodiment, a flow passage 38 is disposed along the shaft center of the spool 23. This flow passage 38 communicates with an inlet 39 and an outlet 40, which are formed on the outer peripheral surface of the spool 23. The oil inside the tank is guided from the drain port 33 to the inlet 39, flows out from the outlet 40 through the flow passage 38, passes through the through hole 1c from the end surface of the flange portion 1a of the stator 1, and is directly guided into the inner housing H of the electromagnetic drive unit DR. Subsequently, the oil guided into the inner housing H passes through the through hole 3b of the plunger 3, and flows in a space between the plunger 3 and the bottom portion 2a of the yoke 2. Accordingly, the oil inside the tank passes through the inside of the spool 23 of the directional control valve unit SP, and is guided into the inner housing H of the electromagnetic drive unit DR. The inner housing H is immersed in oil. Needless to say, a coupling portion between the valve casing 30 and the mounting portion If of the stator 1 is sealed to prevent oil leakage.

The valve casing 30 is surrounded by a casing (not shown) that includes flow passages separately coupled to three ports 31, 32, and 33. These flow passages are separated by O-rings 21 and 22 fitted onto the valve casing 30.

Subsequently, a description will be given of operation of the solenoid valve SOV, which includes the electromagnetic drive unit DR and the directional control valve unit SP. In order to make the solenoid valve SOV operate, first, the solenoid valve SOV is coupled to an electric power supply. This electric power supply may be any of a DC power supply or an AC power supply. For example, the DC power supply may use DC12V or DC24V and the AC power supply may use AC100V (50/60 Hz) or AC200V.

In an initial state where power feeding to the coil 8 is not performed, as illustrated in FIG. 1, the spool 23 is biased toward the stator 1 by the spring 24. Accordingly, the supply port 31 and the output port 32 communicate with each other while the output port 32 and the drain port 33 are obstructed.

When the electric power supply feeds power to the coil 8 through the terminal 13, the coil 8 generates a magnetic field (an exciting force). Therefore, the plunger 3 is attracted to the fixed iron core 1b by an attraction force corresponding to an amount of current. At this time, the plunger 3 is displaced toward the fixed iron core 1b while the resin layer 3e formed on the outer peripheral surface of the plunger 3 is brought into sliding contact with the inner peripheral surface of the long cylindrical portion 2b. This displacement amount of the plunger 3 is transmitted to the spool 23 via the pin 4, which is press-fitted into the plunger 3. This moves the spool 23 in the downward direction of FIG. 1. In view of this, the supply port 31 and the output port 32 are obstructed due to the contact between the land 36 and the sealing surface 34. The output port 32 and the drain port 33 communicate with each other.

In the event that the power feeding to the coil 8 is stopped, the magnetic field by the coil 8 vanishes. A tensile force of the spring 24 moves the spool 23 in the upward direction of FIG. 1 to return the spool 23 in the initial state. Accordingly, when power feeding to the coil 8 is not performed, the pressure oil from the hydraulic pump flows into the valve casing 30 from the supply port 31, and is supplied to the actuator via the output port 32. On the other hand, when power feeding to the coil 8 is performed, the pressure oil supplied to the actuator flows the inside of the valve casing 30 from the output port 32, and is discharged into the tank via the drain port 33.

As described above, with this embodiment, the inner housing H is simply manufactured by welding the stator 1, the ring 5, and the yoke 2 together. Machining on the inner peripheral surface of the inner housing H is not needed after the welding. Accordingly, this reduces the number of processing operations, and manufactures the inner housing at low cost with quick turnaround time. Additionally, bonding the yoke 2 and the ring 5 by butt-welding reduces deformation of the yoke 2 due to welding and a similar trouble, thus ensuring proper movement of the plunger 3. Further, with this embodiment, bonding the stator 1 and the ring 5 by lap-welding saves labor on welding, thus significantly contributing to cost reduction. Further, the weld line of the lap-welding is formed in the position separated from the magnetic controller 1e with the spacing X with respect to the base end surface 1d. This eliminates a problem of variation in magnetic property due to heat influence of the lap-welding on the magnetic controller 1e. Additionally, after the second process for butt-welding on the ring 5 and the yoke 2, the third process for lap-welding on the ring 5 and the stator 1 is performed. This manufacturing method reduces variation in welding quality, and ensures simplified control of the welding process.

In view of this, the electromagnetic drive unit according to this embodiment ensures a simple operation of the process where the stator 1, the ring 5, and the yoke 2 are welded from the outside only while the plunger 3 is enclosed. In spite of this simple process, this electromagnetic drive unit manufactures the inner housing H at low-price while ensuring quality.

### REFERENCE SIGNS LIST

- 1: stator
- 1d: base end surface
- 1e: magnetic controller
- 1g: second level difference portion
- 2: yoke
- 2e: first level difference portion
- 3: plunger
- 5: ring (cylindrical member)
- H: inner housing
- SA: solenoid assembly
- DR: electromagnetic drive unit
- SP: directional control valve unit
- SOV: solenoid valve

## Claims

1. An electromagnetic drive unit comprising:
an inner housing (H) including:
a stator (1) that is made of magnetic material;
a yoke (2) that is coaxially disposed with respect to the stator, the yoke being made of magnetic material; and
a cylindrical member (5) that is made of non-magnetic material, the cylindrical member being disposed in a position between the stator and the yoke, the cylindrical member being coaxially disposed with respect to the stator, the cylindrical member coupling the stator and the yoke together;
a plunger (3) that is housed in the inner housing, the plunger axially moving while being guided along an inner peripheral surface of the inner housing; and
a solenoid assembly (SA) that is mounted to surround the inner housing, the solenoid assembly being configured to closely separate the plunger from the stator using power feeding control, **characterized in that** a first indentation (2e) is formed in an end portion at the stator side of an outer peripheral surface of the yoke;
the stator has a base end surface (1d) facing the plunger (3), the base end surface including a magnetic controller (1e) that is a circular member axially projecting from the base end surface (1d), the magnetic controller being configured to control a magnetic force, a second indentation (1g) being formed in an end portion at the base end surface side of an outer peripheral surface of the stator;
the cylindrical member (5) has an inner diameter at one end side and an inner diameter at another end side, the inner diameter at the one end side having approximately the same size as the outline size of the first indentation (2e), the inner diameter at the other end side having approximately the same size as the outline size of the second indentation (1g);
the inner housing (H, 2) is formed by:
a butt-welded bonding of the one end side of the cylindrical member and the first indentation (2e) formed in the yoke in a state where the one end side of the cylindrical member is fitted in the first indentation (2e); and a lap-welded bonding of the other end side of the cylindrical member and the second indentation 1g) formed in the stator in a state where the other end side of the cylindrical member is fitted in the second indentation 1g, and
a weld line (B) of the cylindrical member (5) and the stator (1) is axially between the base end (1d) of the stator and the other end side of the cylindrical member, and formed in a position at a predetermined interval (X) from the base end surface, the position being in an opposite direction of the projecting direction of the circular member of the magnetic controller (1e).

2. A method for manufacturing an electromagnetic drive unit, the electromagnetic drive unit comprising:
an inner housing (H) including:
a stator (1) that is made of magnetic material;
a yoke (2) that is coaxially disposed with respect to the stator, the yoke being made of magnetic material; and
a cylindrical member (5) that is made of non-magnetic material, the cylindrical member being disposed in a position between the stator and the yoke, the cylindrical member being coaxially disposed with respect to the stator, the cylindrical member coupling the stator and the yoke together; and
a plunger (3) that is housed in the inner housing, the plunger axially moving while being guided by an inner peripheral surface of the inner housing,
wherein a first indentation (2e) is formed in an end portion at the stator side of an outer peripheral surface of the yoke;
the stator has a base end surface (1d) facing the plunger, the base end surface including a magnetic controller (1e) that is a circular member axially projecting, the magnetic controller being configured to control a magnetic force, a second indentation (1g) being formed in an end portion at the base end surface (1d) side of an outer peripheral surface of the stator; and
the cylindrical member has an inner diameter at one end side and an inner diameter at another end side, the inner diameter at the one end side having approximately the same size as the outline size of the first indentation (2e), the inner diameter at the other end side having approximately the same size as the outline size of the second indentation (1g),
wherein the method for manufacturing the electromagnetic drive unit comprising:
a first step of fitting the one end side of the cylindrical member in the first indentation (2e) of the yoke in a state where the plunger is enclosed, and fitting the other end side of the cylindrical member in the second indentation (1g) of the stator to assemble the inner housing;
a second step of bonding a butt portion (A) between an end surface of the cylindrical member at the one end side and the first indentation (2e) of the yoke by butt-welding after the first step; and
a third step of bonding the other end side of the cylindrical member and the second indentation (1g) of the stator by lap-welding after the second step, so as to form a weld line (B) of the cylindrical member (5) and the stator (1) axially between the base end (1d) of the stator and the other end side of the cylindrical member and in a position at a predetermined interval (X) from the base end surface, the position being in an opposite direction of the projecting direction of the circular member of the magnetic controller (1e).

## Patentansprüche

1. Elektromagnetische Antriebseinheit, umfassend:
ein inneres Gehäuse (H), aufweisend:
einen Stator (1), der aus magnetischen Material hergestellt ist;
ein Joch (2), das bezüglich des Stators koaxial angeordnet ist, wobei das Joch aus magnetischem Material hergestellt ist; und
ein zylindrisches Element (5), das aus nicht-magnetischen Material hergestellt ist, wobei das zylindrische Element in einer Position zwischen dem Stator und dem Joch angeordnet ist, wobei das zylindrische Element koaxial bezüglich des Stators angeordnet ist, wobei das zylindrische Element den Stator und das Joch miteinander koppelt;
einen Tauchkolben (3), der sich in dem inneren Gehäuse befindet, wobei sich der Tauchkolben axial bewegt, während er entlang einer Innenumfangsoberfläche des inneren Gehäuses geführt wird; und
eine Solenoidanordnung (SA), die dazu angebracht ist, das innere Gehäuse zu umgeben, wobei die Solenoidanordnung dazu konfiguriert ist, unter Verwendung einer Steuerung unter Stromeinspeisung den Tauchkolben von dem Stator eng zu beabstanden,
**dadurch gekennzeichnet, dass**
eine erste Vertiefung (2e) in einem Endabschnitt auf der Statorseite einer Außenumfangsoberfläche des Jochs ausgebildet ist;
der Stator eine untere Endfläche (1d) hat, die zu dem Tauchkolben (3) hin weist, wobei die untere Endfläche eine Magnetsteuerung (1e) aufweist, die ein kreisrundes Element ist, das von der unteren Endfläche (1d) axial hervorsteht, wobei die Magnetsteuerung dazu konfiguriert ist, eine Magnetkraft zu steuern, wobei eine zweite Vertiefung (1g) in einem Endabschnitt an der unteren Endflächenseite einer Außenumfangsoberfläche des Stators ausgebildet ist;
das zylindrische Element (5) einen Innendurchmesser an einer Stirnseite und einen Innendurchmesser an einer anderen Stirnseite hat, wobei der Innendurchmesser an der einen Stirnseite ungefähr die gleiche Größe wie die Konturgröße der ersten Vertiefung (2e) hat, der Innendurchmesser an der anderen Stirnseite ungefähr die gleiche Größe wie die Konturgröße der zweiten Vertiefung (1g) hat;
das innere Gehäuse (H, 2) ausgebildet wird durch:
eine stumpfgeschweißte Verbindung der einen Stirnseite des zylindrischen Elements und der ersten Vertiefung (2e), die in dem Joch ausgebildet ist, in einem Zustand, in dem die eine Stirnseite des zylindrischen Elements in die erste Vertiefung (2e) eingepasst ist; und
eine überlappgeschweißte Verbindung der anderen Stirnseite des zylindrischen Elements und der zweiten Vertiefung (1g), die in dem Stator ausgebildet ist, in einem Zustand, in dem die andere Stirnseite des zylindrischen Elements in die zweite Vertiefung (1g) eingepasst ist, und
eine Schweißnaht (B) des zylindrischen Elements (5) und des Stators (1) axial zwischen dem unteren Ende (1d) des Stators und der anderen Stirnseite des zylindrischen Elements ist und in einer Position in einem vorbestimmten Abstand (X) von dem unteren Ende ausgebildet ist, wobei die Position in einer entgegengesetzten Richtung zu der Vorstehrichtung des kreisrunden Elements der Magnetsteuerung (1e) ist.

2. Verfahren zum Herstellen einer elektromagnetischen Antriebseinheit, die elektromagnetische Antriebseinheit umfassend:
ein inneres Gehäuse (H), aufweisend:
einen Stator (1), der aus magnetischen Material hergestellt ist;
ein Joch (2), das bezüglich des Stators koaxial angeordnet ist, wobei das Joch aus magnetischem Material hergestellt ist; und
ein zylindrisches Element (5), das aus nicht-magnetischen Material hergestellt ist, wobei das zylindrische Element in einer Position zwischen dem Stator und dem Joch angeordnet ist, wobei das zylindrische Element koaxial bezüglich des Stators angeordnet ist, wobei das zylindrische Element den Stator und das Joch miteinander koppelt; und
einen Tauchkolben (3), der sich in dem inneren Gehäuse befindet, wobei sich der Tauchkolben axial bewegt, während er entlang einer Innenumfangsoberfläche des inneren Gehäuses geführt wird;
wobei eine erste Vertiefung (2e) in einem Endabschnitt auf der Statorseite einer Außenumfangsoberfläche des Jochs ausgebildet ist;
der Stator eine untere Endfläche (1d) hat, die zu dem Tauchkolben (3) hin weist, wobei die untere Endfläche eine Magnetsteuerung (1e) aufweist, die ein kreisrundes Element ist, das axial hervorsteht, wobei die Magnetsteuerung dazu konfiguriert ist, eine Magnetkraft zu steuern, wobei eine zweite Vertiefung (1g) in einem Endabschnitt an der unteren Endfläche (1d) einer Außenumfangsoberfläche des Stators ausgebildet ist; und
das zylindrische Element (5) einen Innendurchmesser an einer Stirnseite und einen Innendurchmesser an einer anderen Stirnseite hat, wobei der Innendurchmesser an der einen Stirnseite ungefähr die gleiche Größe wie die Konturgröße der ersten Vertiefung (2e) hat, der Innendurchmesser an der anderen Stirnseite ungefähr die gleiche Größe wie die Konturgröße der zweiten Vertiefung (1g) hat;
wobei das Verfahren zum Herstellen der elektromagnetischen Antriebseinheit umfasst:
einen ersten Schritt zum Einpassen der einen Stirnseite des zylindrischen Elements in die erste Vertiefung (2e) des Jochs in einem Zustand, in dem der Tauchkolben eingeschlossen ist, und Einpassen der anderen Stirnseite des zylindrischen Elements in die zweite Vertiefung (1g) des Stators zum Zusammensetzen des inneren Gehäuses;
einen zweiten Schritt des Verbindens eines auf Stoß liegenden Teils (A) zwischen einer Endfläche des zylindrischen Elements an der einen Stirnseite und der ersten Vertiefung (2e) des Jochs durch Stumpfschweißen nach dem ersten Schritt; und
einen dritten Schritt zum Verbinden der anderen Stirnseite des zylindrischen Elements und der zweiten Vertiefung (1g) des Stators durch Überlappschweißen nach dem zweiten Schritt, um so eine Schweißnaht (B) des zylindrischen Elements (5) und des Stators (1) axial zwischen der unteren Endfläche (1d) des Stators und der anderen Stirnseite des zylindrischen Elements und in einer Position in einem vorbestimmten Abstand (X) von der unteren Endfläche auszubilden, wobei die Position in einer entgegengesetzten Richtung zu der Vorstehrichtung des kreisrunden Elements der Magnetsteuerung (1e) ist.

## Revendications

1. Unité de commande électromagnétique comprenant :
un boîtier interne (H) comprenant :
un stator (1) qui est composé d'un matériau magnétique ;
une culasse (2) qui est disposée coaxialement par rapport au stator, la culasse étant composée d'un matériau magnétique ; et
un élément cylindrique (5) qui est composé d'un matériau non magnétique, l'élément cylindrique étant disposé dans une position entre le stator et la culasse, l'élément cylindrique étant disposé coaxialement par rapport au stator, l'élément cylindrique reliant ensemble le stator et la culasse ;
un piston (3) qui est logé dans le boîtier interne, le piston se déplaçant axialement tout en étant guidé le long d'une surface périphérique interne du boîtier interne ; et
un ensemble de solénoïde (SA) qui est monté pour entourer le boîtier interne, l'ensemble de solénoïde étant configuré pour séparer étroitement le piston du stator à l'aide d'une commande d'alimentation électrique, **caractérisée en ce que**
une première indentation (2e) est formée dans une partie d'extrémité côté du stator d'une surface périphérique externe de la culasse ;
le stator possède une surface d'extrémité de base (1d) qui fait face au piston (3), la surface d'extrémité de base comprenant un dispositif de commande magnétique (1e) qui est un élément circulaire qui se projette axialement depuis la surface d'extrémité de base (1d), le dispositif de commande magnétique étant configuré pour contrôler une force magnétique, une seconde indentation (1g) étant formée dans une partie d'extrémité au niveau du côté de surface d'extrémité de base d'une surface périphérique externe du stator ;
l'élément cylindrique (5) possède un diamètre interne au niveau d'un côté d'extrémité et un diamètre interne au niveau d'un autre côté d'extrémité, le diamètre interne au niveau du côté d'extrémité ayant approximativement la même taille que la taille du contour de la première indentation (2e), le diamètre interne au niveau de l'autre côté d'extrémité ayant approximativement la même taille que la taille du contour de la seconde indentation (1g) ;
le boîtier interne (H, 2) est formé par :
une liaison soudée entre le côté d'extrémité de l'élément cylindrique et la première indentation (2e) formée dans la culasse dans une configuration selon laquelle le côté d'extrémité de l'élément cylindrique est placé dans la première indentation (2e) ; et
une liaison soudée par recouvrement (B) entre l'autre côté d'extrémité de l'élément cylindrique (5) et la seconde indentation (1g) formée dans le stator (1) dans une configuration selon laquelle l'autre côté d'extrémité de l'élément cylindrique est placé dans la seconde indentation (1g), et
une ligne de soudure (B) entre l'élément cylindrique (5) et le stator (1) est formée axialement entre l'extrémité de base (1d) du stator et l'autre côté d'extrémité de l'élément cylindrique, et est formée à un emplacement à un intervalle prédéterminé (X) par rapport à la surface d'extrémité de base,
l'emplacement étant dans une direction opposée à la direction de projection de l'élément circulaire du dispositif de commande magnétique (1e).

2. Procédé de fabrication d'une unité de commande électromagnétique, l'unité de commande électromagnétique comprenant :
un boîtier interne (H) comprenant :
un stator (1) composé d'un matériau magnétique ;
une culasse (2) qui est disposée coaxialement par rapport au stator, la culasse étant composée d'un matériau magnétique ; et
un élément cylindrique (5) qui est composé d'un matériau non magnétique, l'élément cylindrique étant disposé dans une position entre le stator et la culasse, l'élément cylindrique étant disposé coaxialement par rapport au stator, l'élément cylindrique reliant ensemble le stator et la culasse ; et
un piston (3) qui est logé dans le boîtier interne, le piston se déplaçant axialement tout en étant guidé par une surface périphérique interne du boîtier interne ;
dans lequel une première indentation (2e) est formée dans une partie d'extrémité côté stator d'une surface périphérique externe de la culasse ;
le stator possède une surface d'extrémité de base (1d) faisant face au piston, la surface d'extrémité de base comprenant un dispositif de commande magnétique (1e) qui est un élément circulaire qui se projette axialement , le dispositif de commande magnétique étant configuré pour contrôler une force magnétique, une seconde indentation (1g) étant formée dans une partie d'extrémité au niveau du côté de surface d'extrémité de base d'une surface périphérique externe du stator ; et
l'élément cylindrique (5) possède un diamètre interne au niveau d'un côté d'extrémité et un diamètre interne au niveau d'un autre côté d'extrémité, le diamètre interne au niveau du côté d'extrémité ayant approximativement la même taille que la taille du contour de la première indentation (2e), le diamètre interne au niveau de l'autre côté d'extrémité ayant approximativement la même taille que la taille du contour de la seconde indentation (1g) ;
dans lequel le procédé de fabrication de l'unité de commande électromagnétique comprend :
une première étape de placement du côté d'extrémité de l'élément cylindrique dans la première indentation (2e) de la culasse dans une configuration selon laquelle le piston est enfermé, et de placement de l'autre côté d'extrémité de l'élément cylindrique dans la seconde indentation (1g) du stator afin d'assembler le boîtier interne ;
une seconde étape de liaison d'une partie de bout (A) entre une surface d'extrémité de l'élément cylindrique au niveau du côté d'extrémité et la première indentation (2e) de la culasse par soudage après la première étape ; et
une troisième étape de liaison de l'autre côté d'extrémité de l'élément cylindrique et de la seconde indentation (1g) du stator par soudage par recouvrement après la seconde étape, de façon à former une ligne de soudure (B) entre l'élément cylindrique (5) et le stator (1) de manière axiale entre l'extrémité de base (1d) du stator et l'autre côté d'extrémité de l'élément cylindrique et à un emplacement situé à un intervalle prédéterminé (X) par rapport à la surface d'extrémité de base, l'emplacement étant dans une direction opposée à la direction de projection de l'élément circulaire du dispositif de commande électromagnétique (1e).
